# EUROPEAN PATENT SPECIFICATION

(11) **EP 1 229 287 B1**
(45) Date of publication and mention of the grant of the patent: **22.10.2003**
(21) Application number: 01830040.0
(22) Date of filing: 24.01.2001
(51) Int. Cl.: F16N 29/00

(54) **System and method for monitoring and managing data related to motor machines**
Verfahren und Vorrichtung zur Beobachtung und Datenverwaltung von Motoren
Système et méthode pour le contrôle et la gestion d'informations sur le fonctionnement de différentes machines

(43) Date of publication of application: 07.08.2002
(73) Proprietor: Union Key S.r.l., 73100 Lecce (IT)
(72) Inventor: Giannone, Piero, c/o Union Key S.r.l., 73100 Lecce (IT)
(74) Representative: Leone, Mario

(56) References cited:
- GB-A- 2 108 273
- US-A- 3 526 127
- US-A- 4 651 560
- US-A- 5 377 531
- US-A- 5 777 211

## Description

The present invention refers to a system and method for monitoring and managing data related to motor machines, in particular to physical/chemical parameters related to the utilized lubricants.

The lubricant performs some vital functions for the correct operation of a motor. In particular it is utilized to limit at most the frictional resistance and therefore the wear of moving parts in contact. Furthermore, it guarantees the motor cleaning by preventing the formation of deposits, by protecting the parts thereof against the corrosive action of the acid products formed with the combustion. At last, it contributes to cool the components, in order to maintain the operating temperature within the limits provided for a correct operation of the motor itself.

The lubricant quality and the decay status are then factors which have to be kept in proper consideration if an efficient maintenance program is wanted to be implemented.

Today the maintenance of the motor machines is essentially performed on the basis of the indications provided by the manufacturing houses about the periodical check and maintenance interventions to be performed, for example with respect to covered kilometers or to operating hours.

Then, at regular intervals, a motor will undergo specific already programmed operations, for example the lubricant replacement, independently from the wear status of the mechanical members.

This kind of maintenance, although it can be considered of preventive kind since it aims at avoiding that damages to the motor occur, cannot be considered wholly reliable, above of all since it does not consider the conditions of the motor utilization between a check and the following one and therefore the real wear status of the mechanical members of the motor itself.

An oil analysis system is known from US patent n. 3,526,127, apt to measure viscosity and/or metal concentration in a sample of lubricant.

Processing such data the system can gives some information related to the wear status of the engine.

Although, such system is limited and does not allows a reliable prediction on the possible damages occurring in the engine, because the only measure of viscosity and metallic content is not enough to perform a complete statistical analysis.

It is an object of the present invention to solve the above mentioned problems of prior art by providing a method for monitoring and managing data related to motor machines which comprises the following steps of:
- picking up one or more lubricant samples from a machine;
- storing in a first database first information identifying one or more users;
- storing in a second database second information identifying a plurality of vehicles, said second information comprising second reference values of physical/chemical parameters for a plurality of lubricant types;
- analysing said one or more lubricant samples, so as to measure first values related to a plurality of physical/chemical parameters of said lubricant; and
- processing said first values, by obtaining indicative information about the wear status of mechanical members of said machine,
wherein said physical/chemical parameters comprise:
- Viscosity;
- Yield value;
- Flash point;
- Volatility
- Stability to oxidation;
- Detergent and dispersant capability;
- Anticorrosive and rust-preventing capability;
- Antifoaming capability;
- Sulphate ashes; and
- Metallic elements.

The present invention furthermore provides a system for monitoring and managing data related to motor machines, which comprises:
- a picking-up unit, apt to pick up one of more lubricant samples for mechanical members of a user's machine;
- an analysis unit of said one or more lubricant samples, apt to measure data related to a plurality of physical/chemical parameters of said lubricant;
- a gathering unit of said data coming from said analysis unit;
- a processing unit, comprising:
- data storing means; and
- means for processing said stored data,
wherein said data processing means is apt to provide indicative information about the wear status of said mechanical members of said machine, and said physical/chemical parameters comprise:
- Viscosity;
- Yield value;
- Flash point;
- Volatility;
- Stability to oxidation;
- Detergent and dispersant capability;
- Anticorrosive and rust-preventing capability;
- Antifoaming capability;
- Sulphate ashes; and
- Metallic elements.

The main advantage of the method according to the present invention is that it enables implementing an efficient maintenance program allowing to constantly monitor the lubricant quality, by consequently providing precious indications about the wear status of the mechanical members of the motor itself.

A second advantage of the method according to the present invention is that it allows establishing, time by time, the best interval between two subsequent replacements of lubricant, also with respect to the particular utilization conditions of the motor, by furthermore enabling to program routine and extraordinary maintenance interventions on the basis of real surveys and measures, so as to prevent unexpected failures and/or breaks.

An additional advantage is that a so-implemented program leads to a considerable decrease in management costs linked to machines maintenance.

Further advantages, features and application modes of the present invention will be evident from the following detailed description of a preferred embodiment thereof, shown by way of example and not for limitative purposes, by referring to the figures of the enclosed drawings, wherein:
figure 1 is a block diagram of the system according to the present invention;
figure 2 is a flow chart of the method according to the present invention; and
figures 3 to 7 are screens of the managing program of the system according to the present invention.

Hereinafter in the present description, a preferred embodiment of the present invention will be referred to. Such embodiment allows to monitor and manage data related to a plurality of motor vehicles, such as cars, motorcycles or trucks and in particular data related to the analysis of the oil utilized as lubricant of the motor mechanical members.

It is to be meant that the method and system according to the present invention may be implemented also by referring to motor machines of other kind, such as for example industrial machines, cranes, pumps or any other machine the operation thereof is based upon the utilization of a motor.

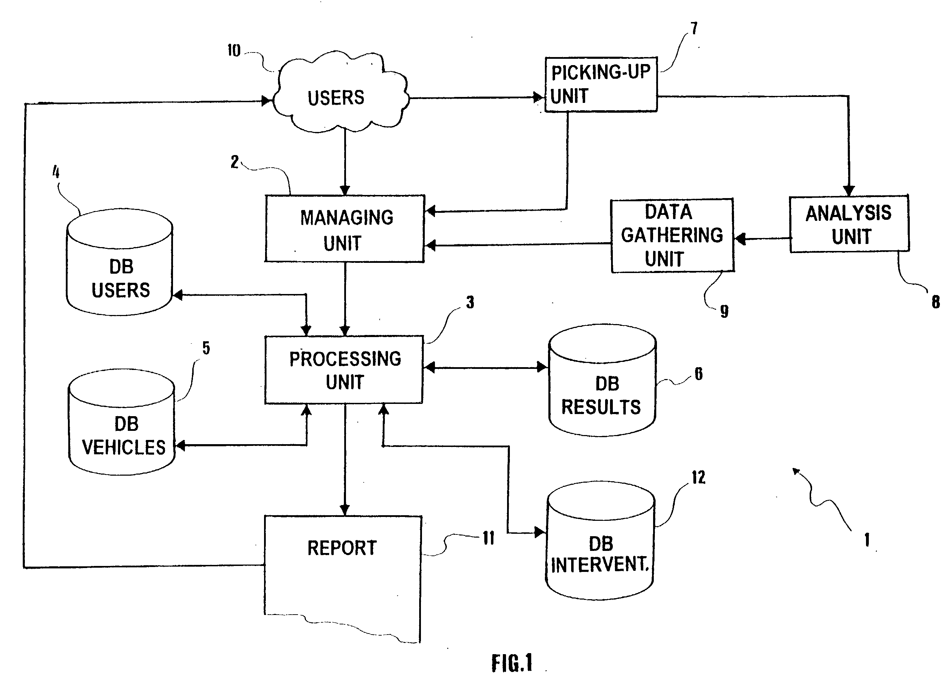

By firstly referring to the figure 1, it is a block diagram of a system 1 according to the present invention.

A managing unit 2 coordinates the activity of the whole system 1. A plurality of users 10 is linked to this managing unit, directly or by known-type communication means, for examples by telephone or by Internet, or by other known communication channels suitable for the provided purposes.

To the managing unit 2 a data processing unit 3 is connected comprising means 4, 5, 6 for storing data. In particular said storing means comprises a first database 4 (DB USERS) apt to contain first information identifying each of the users 10 of the system.

A second database 5 (DB VEHICLES) is instead apt to contain information identifying a plurality of vehicles and second features related thereto, and also to a series of reference values related to physical/chemical parameters for a plurality of lubricant types.

A third database 6 (DB RESULTS), at last, will contain values related to physical/chemical parameters obtained, as it will be explained hereinafter in the description, by an analysis of lubricant samples picked-up for example from the motor.

A fourth database 12 (DB INTERVENTIONS) is apt to contain information and data related to the technical interventions already performed on each vehicle managed by the system 1.

Hereinafter in this description, the motor oil will be continued to be referred to, such as for example the lubricant the quality thereof is to be monitored. It is to be meant that the method and system according to the present invention can be implemented also to monitor the wear status related to other lubricants utilized in a motor, such as for example the oil utilized in a gearing system, by extending also to these members the advantages resulting therefrom.

A picking-up unit 7 connected to the managing unit 2, upon indication of the managing unit 2 provides for picking up motor oil samples from the vehicles of the users 10.

Such samples are analyzed by an analysis unit 8 which measures the values of determined physical/chemical parameters related to the oil. The data coming from the analysis unit 8 are sent to a data gathering unit 9 which in turn provides for sending them to the managing unit 2 which, by means of the data processing unit, stores the same in a database 6.

The processing unit 3 compares the results of the analysis to the stored referance values. Furthermore, by applying statistical models to the information contained in the databases 4, 5 and 6, the unit 3 provides information to the user as a 'report' 11. The report 11 contains, apart from the measured values of the analyzed physical/chemical parameters, a 'diagnosis', performed on the basis of such values, showing to the user in a clear and precise way the preservation and/or wear status of determined mechanical members of the motor, in case by pointing out the need for maintenance interventions, both routine and extraordinary ones.

The system 1, then, provides a structure apt to implement a preventive maintenance program which follows a precise data monitoring and managing method.

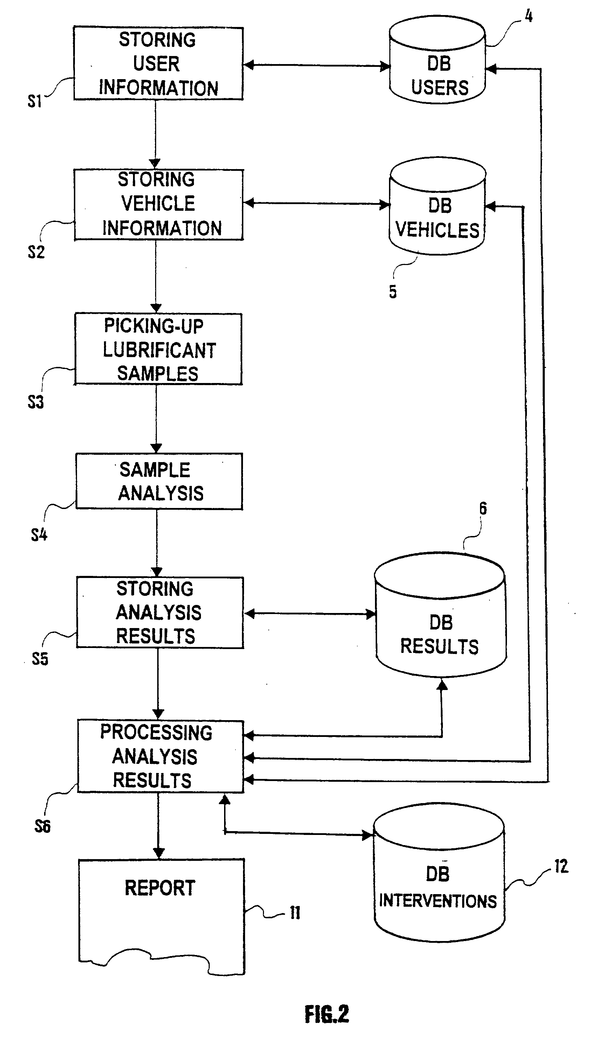

The figure 2 is a flow chart showing the main steps of the method according to the present invention. The method at first provides a first step S1 of storing indicative information about a plurality of users. Such information is stored in a first database 4 (DB USERS). A second step S2 provides the storing, in a second database 5(DB VEHICLES), information related to a plurality of vehicles, comprising reference values of physical/chemical parameters for a plurality of lubricant types.

Periodically, for example each covered 10.000 Km or once a predetermined period of time has elapsed, a step S3 is performed of picking-up some c.c.-sample of motor oil from each of the vehicles submitted to the preventive maintenance program.

Such samples are then sent to a laboratory to be submitted to a series of analyses (step S4) apt to measure the values of predetermined physical/chemical parameters, each of them is directly or indirectly connected to the oil decay status and to the motor wear status.

According to the preferred embodiment of the present invention, the measured parameters are:
Viscosity
The viscosity must be contained within precise limits. In fact a too viscous oil creates considerable problems, especially at low temperatures, upon starting the motor and in the circulation of the oil itself in the canalizations of the lubrication circuit.
The greater the viscosity is, the slower the oil starts circulating, with consequent wear increase. On the other hand, the viscosity cannot be either too low, otherwise the lubricant film creating between the moving parts in contact could interrupt and cause seizure or even melting between such members.
Yield value
The yield value, is the lowest temperature at which oil can still flow. Such parameter must be always lower than the minimum temperature of the environment in which the motor operates.
Flash point
The flash point is the temperature at which the vapour of a heated oil flames up if exposed to free flame.
A too low value compared to a standard reference value denotes a fuel contamination.
Volatility
The presence of light hydrocarbon fractions involves a greater vaporisation and consequently great oil consumption.
Stability to oxidation
The formation of oxidized products is important for the action thereof as corrosive agents, in particular for some metal types.
Detergent and dispersant capability
Inside a motor deposits of various kind are formed, depending on the temperature of the surfaces whereon they are formed.
The deposits on the surfaces at high temperature form for example in the combustion chambers, on pistons and on valve heads. These deposits are 'hot points' which can cause malfunctions in the motor (incorrect closure of valves, preignition, etc.). The deposits on the surfaces at medium temperatures form on the grooves and skirts of pistons and also on the suction valves. They also can cause sticking of piston rings or formation of lakes. At last, deposits on surfaces at low temperature form on the caps of tappets and timing system, on the carter walls, in the filters, in the lubrication channels, etc. This kind of deposit, usually called sludge, mainly causes obstructions of filters and lubricant channels.
Anticorrosive and rust-preventing capability
The formation of strong acids coming from sulphur, chlorine and bromine, together with the water forming in the combustion, can lead to corrosion and rust phenomena which can attack the motor inner surfaces and cause rapid wear thereof.
Antifoaming capability
The foam is constituted by a great number of air bubbles which have been formed due to the beating thereto oil is submitted. Such phenomenon can cause a not-regular circulation of the lubricant in the circuit.
Sulphate ashes
These ashes are the oil combustion product and cause solid deposits in the combustion chamber.
Metallic elements
The metallic elements found out during the analysis can be contamination elements if coming from wear of mechanical members, or addition elements if coming from formulation of the lubricant itself.
The quantity of metallic elements, measured in ppm (parts per million), is however to be compared to statistical reference data and it provides, according to the found-out element, precise indications about the decay of the lubricant quality, or about possible anomalous wears of determinate mechanical members as shown by the following table:

| **Element** | **Probable wear origin** | **Typical levels (ppm)** | **Comment** |
|---|---|---|---|
| Iron | Piston rings, liners of cylinders, rotation pin of the crankshaft, cams and tappets | From 50 to 200 | It can be higher for new or reconditioned motors. Excessive levels can be caused by mechanical wear or by corrosion and they show the need for determining the existing relation between the oil condition, the operating condition and the fuel quality. |
| Copper | Copper-lead parts of the main bearings and brasses | Up to 5 | For conventional motors without copper-lead bearings. |
| | | | |
| | | Up to 60 | For conventional motors with copper-lead bearings. |
| | | | |
| | | | If high wear levels are noted, the possible decrease in viscosity or the presence of other contaminations and the oil pressure have to be checked. |
| Aluminium | Aluminium-tin pistons or bearings | Up to 5 | For motors without aluminium-tin bearings or pistons. For motors with aluminium-tin bearing and/or pistons. |
| Chrome | Chrome-plated piston rings | Up to 20 | High wear values can show an excessive wear of piston rings and/or liners of cylinders. |
| Tin | Aluminium-tin bearings or fine coating of lead-copper bearings | Up to 5 | For motors without aluminium-tin bearings. |
| | | | |
| | | Up to 50 | For motors with aluminium-tin bearings. |
| | | | |
| | | | Above 50ppm, the same checks provided for copper have to be performed. |
| Silicon | Atmospheric powder | Up to 20 | Under normal conditions. |
| | | | |
| | | Up to 100 | In presence of abundant powder and for long periods or if the air filtering is unsatisfactory. |
| Lead | Copper-lead bearings | Up to 40 | For diesel motors with copper-lead bearings. |
| | | | |
| | | | Above the 40ppm value wear is present, therefore it is necessary to perform the checks provided for the copper. |
| Boron | Contamination due to the refrigerating liquid | Null | If no additive containing boron is utilized, the presence of this element shows a possible blow-by of the refrigerating liquid in the oil. |

A third step S5 of storing the values measured in a third database 6 (DB RESULTS) is furthermore provided.

By means of a subsequent step S6 these values are extracted from a third database 6 and processed, together with the information contained in the previously shown databases 4, 5 and 12, in order to provide indications indicating the wear status of the mechanical members of the motor under examination.

Such so structured information is provided to the user as a 'report' 11 containing, apart from all the analytical results of the performed examinations, also indications formulated on the basis of a statistical-type analysis, about the need or not to perform maintenance interventions on the motor, in order to prevent damages or unexpected breaks.

The analysis of the results is performed in an automatic way by a data processing system. The managing program of such system implements several functions and procedures which allow guaranteeing the correct operation of the whole system.

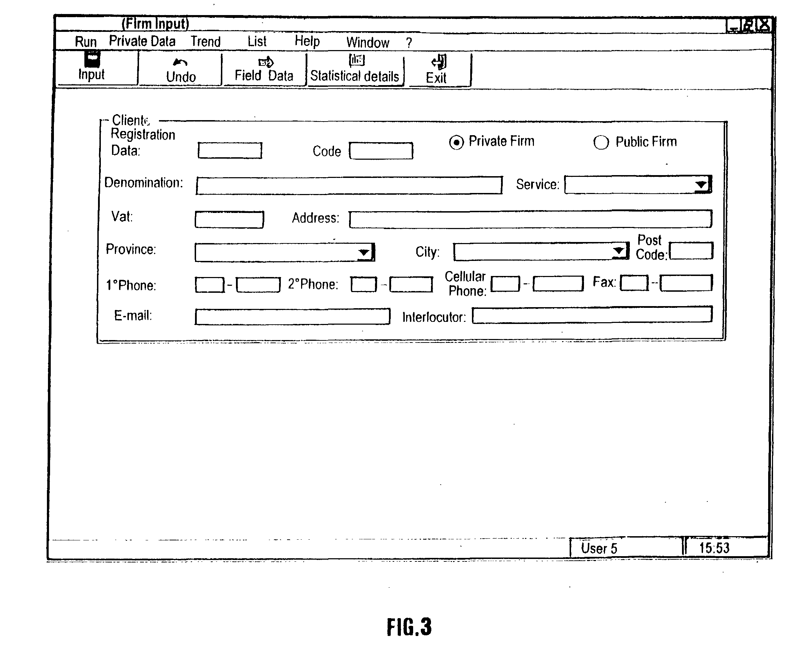

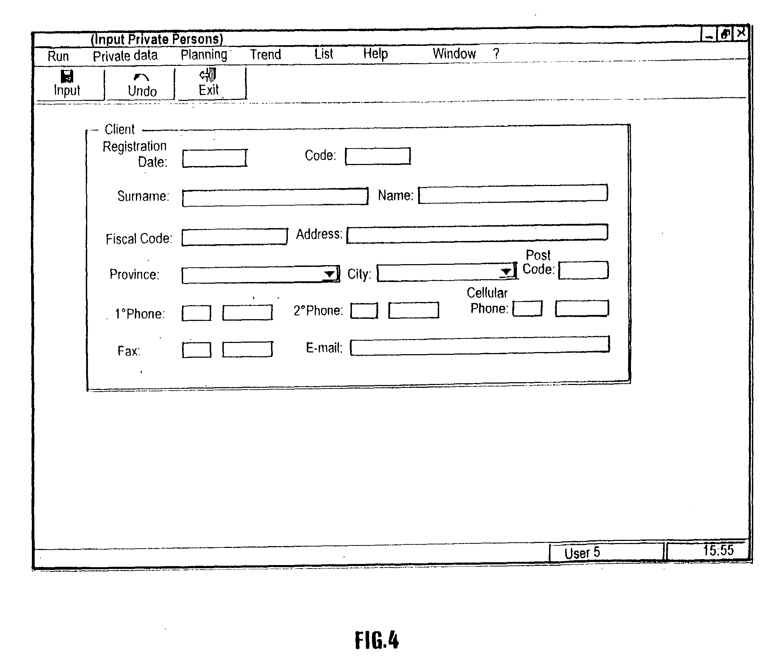

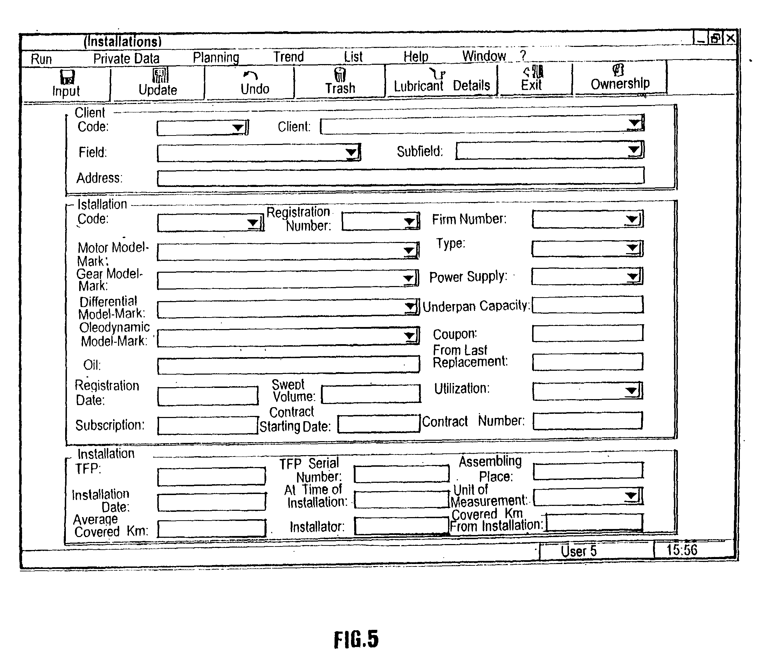

For example, as shown by the figures 3, 4 and 5, a procedure for storing data and information related to the system's users is advantageously provided. For each user such information comprises for example:
- full private data of the user;
- type of machine submitted to the maintenance program;
- mark and type of the utilized lubricant;
- the covered kilometers or the operating hours;
- the already performed interventions.

Other information could be added thereto, of course, if the particular applicable needs would require improving functionality and efficiency of the system.

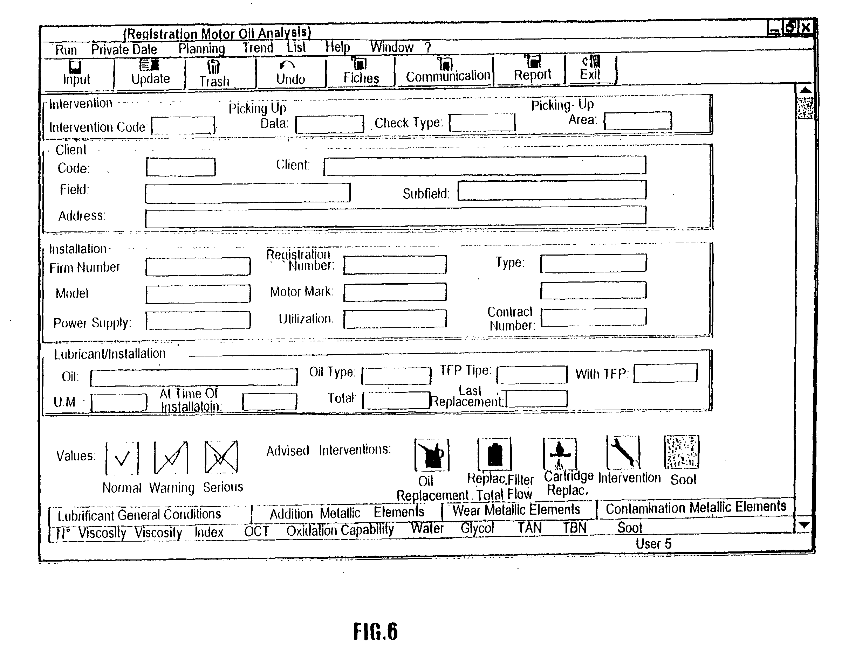

A second provided procedure, thereto figure 6 refers, is to store the values measured during the analysis of the picked-up lubricant samples. This procedure allows the operator to visualize the analytical results of the analysis, but also to process and/or print the 'report' containing, as already said, indications about the need or not to perform maintenance interventions on the motor.

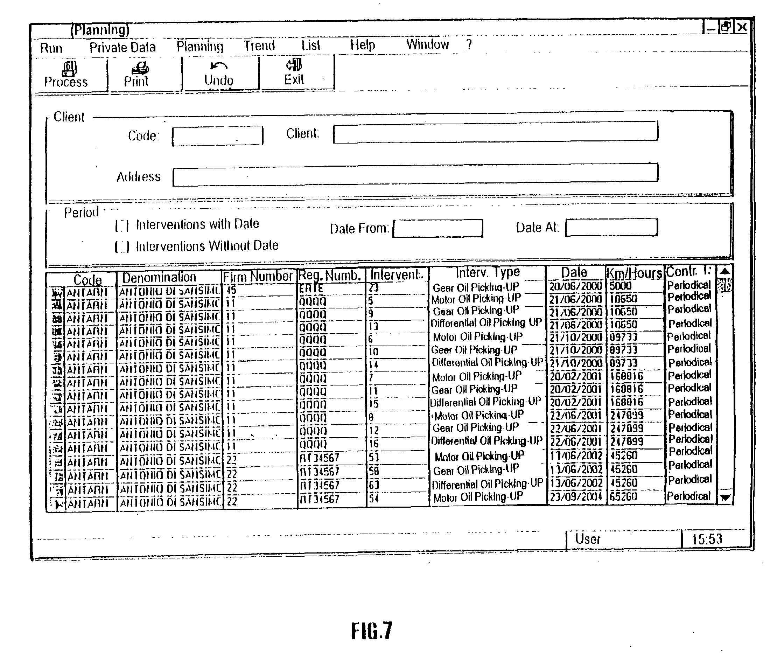

An additional particularly useful function is the 'planning' shown in figure 7. This function allows the operator to constantly monitor the maintenance situation of all the users of the system. Consequently, by utilizing such function, it is possible to timely suggest to each user the need to perform predetermined checks, by means of a constant up-dating of the values related to the covered kilometers or to the operating hours.

Several other functions and/or procedures may be implemented in the managing program, of course, in order to increase the advantages thereof and improve the functions thereof.

The present invention has been. so far described according to a preferred embodiment thereof shown by way of example and not for limitative purposes. It is to be meant that other embodiments may be provided, all of them within the protection scope of the same, as defined by the enclosed claims.

## Claims

1. A method for monitoring and managing data related to motor machines which comprises the following steps of:
- picking up (S3) one or more lubricant samples from a machine;
- storing (S1) in a first database (4) first information identifying one or more users;
- storing (S2) in a second database (5) second information identifying a plurality of vehicles, said second information comprising second reference values of physical/chemical parameters for a plurality of lubricant types;
- analysing (S4) said one or more lubricant samples, so as to measure first values related to a plurality of physical/chemical parameters of said lubricant; and
- processing (S6) said first values, by obtaining indicative information (11) about the wear status of mechanical members of said machine, **characterized in that**
said physical/chemical parameters comprise:
- Viscosity;
- Yield value;
- Flash point;
- Volatility;
- Stability to oxidation;
- Detergent and dispersant capability;
- Anticorrosive and rust-preventing capability;
- Antifoaming capability;
- Sulphate ashes; and
- Metallic elements.

2. A method according to claim 1 , wherein said step (S6) of processing said first values further comprises a step of comparing said first and second values.

3. A method according to claim 1 or 2, further comprising a third step (S5) of storing in a third database (6) said first values of physical/chemical parameters.

4. A method according to any of the preceding claims, wherein said step (S6) of processing said first values provides for the application of a statistical model to the information contained in said first (4), second (5) and third database (6).

5. A method according to any of the preceding claims, wherein said step (S6) of processing said first values furthermore provides for processing information related to technical interventions performed on said motor machines, said information being contained in a fourth database (12).

6. A system (1) for monitoring and managing data related to motor machines which comprises:
- a picking-up unit (7), apt to pick up one of more lubricant samples for mechanical members of a user's machine (10);
- an analysis unit (8) of said one or more lubricant samples, apt to measure data related to a plurality of physical/chemical parameters of said lubricant;
- a gathering unit (9) of said data coming from said analysis unit (8);
- a processing unit (3), comprising:
- data storing means (4, 5, 6, 12); and
- means for processing said stored data,
wherein said data processing means is apt to provide indicative information (11) about the wear status of said mechanical members of said machine, and **characterized in that** said physical/chemical parameters comprise:
- Viscosity;
- Yield value;
- Flash point;
- Volatility;
- Stability to oxidation;
- Detergent and dispersant capability;
- Anticorrosive and rust-preventing capability;
- Antifoaming capability;
- Sulphate ashes; and
- Metallic elements.

7. The system (1) according to claim 6, wherein said data storing means (4, 5, 6, 12) comprises a first database (4) apt to contain first information identifying one or more users (10) of the system (1).

8. The system (1) according to claim 6 or 7, wherein said means for storing data (4, 5, 6, 12) comprises a second database (5) apt to contain second information identifying a plurality of machines, said second information comprising first reference values of physical/chemical parameters for a plurality of lubricant types.

9. The system (1) according to any of the claims 6 to 8, wherein said data storing means (4, 5, 6, 12) comprises a third database (6) apt to contain second values of said physical/chemical parameters of said lubricant, said second values being obtained by means of said analysis of said one or more lubricant samples.

10. The system (1) according to claims 8 and 9, wherein said processing means is apt to compare said first and second values.

11. The system (1) according to any of the claims 6 to 10 wherein said data storing means (4, 5, 6, 12) comprises a fourth database (12) apt to contain information related to technical interventions performed on said motor machines.

12. The system (1) according to any of the claims 7 to 11, wherein said processing means is apt to apply a statistical model to the information contained in said first (4), second (5), third database (6) and fourth database (12).

13. The system (1) according to any of the claims 6 to 12, **characterized in that** it is apt to perform a method according to any of the claims 1 to 5.

## Patentansprüche

1. Verfahren zum Überwachen und Verwalten von Daten, die sich auf motorgetriebene Maschinen beziehen, das die folgenden Schritte umfasst:
Aufnehmen (S3) einer/mehrerer Schmiermittelprobe/n aus einer Maschine;
Speichern (S1) erster informationen, die einen oder mehrere Benutzer identifizieren, in einer ersten Datenbank (4);
Speichern (S2) zweiter Informationen, die eine Vielzahl von Fahrzeugen identifizieren, in einer zweiten Datenbank (5), wobei die zweiten Informationen zweite Bezugswerte physikalischer/chemischer Parameter für eine Vielzahl von Schmiermitteltypen umfassen;
Analysieren (S4) der einen/mehreren Schmiermittelprobe/n, um so erste Werte zu messen, die sich auf eine Vielzahl physikalischer/chemischer Parameter des Schmiermittels beziehen; und
Verarbeiten (S6) der ersten Werte, indem anzeigende Informationen (11) über den Verschleißstatus mechanischer Elemente der Maschine gewonnen werden, **dadurch gekennzeichnet, dass** die physikalischen/chemischen Parameter umfassen:
Viskosität;
Fließgrenze;
Flammpunkt;
Flüchtigkeit;
Oxidationsbeständigkeit;
Reinigungs- und Dispergiervermögen;
Korrosionsschutz- und Rostverhinderungsvermögen;
Schaumverhinderungsvermögen;
Sulfataschen; und
metallische Elemente.

2. Verfahren nach Anspruch 1, wobei der Schritt (S6) des Verarbeitens der ersten Werte des Weiteren einen Schritt des Vergleichens der ersten und zweiter Werte umfasst.

3. Verfahren nach Anspruch 1 oder 2, das des Weiteren einen dritten Schritt (S5) des Speicherns der ersten Werte physikalischer/chemischer Parameter in einer dritten Datenbank (6) umfasst.

4. Verfahren nach einem der vorangehenden Ansprüche, wobei der Schritt (S6) des Verarbeitens der ersten Werte die Anwendung eines statistischen Modells auf die in der ersten (4), der zweiten (5) und der dritten Datenbank (6) enthaltenen Informationen vorsieht.

5. Verfahren nach einem der vorangehenden Ansprüche, wobei der Schritt (S6) des Verarbeitens der ersten Werte des Weiteren das Verarbeiten von Informationen vorsieht, die sich auf technische Eingriffe beziehen, die an den motorgetriebenen Maschinen ausgeführt werden, wobei die Informationen in einer vierten Datenbank (12) enthalten sind.

6. System (1) zum Überwachen und Verwalten von Daten, die sich auf motorgetriebene Maschinen beziehen, das umfasst:
eine Aufnahmeeinheit (7), die in der Lage ist, eine/mehrere Schmiermittelprobe/n für mechanische Elemente der Maschine (10) eines Benutzers aufzunehmen;
eine Analyseeinheit (8) der einen/mehreren Schmiermittelprobe/n, die in der Lage ist, Daten zu messen, die sich auf eine Vielzahl physikalischer/chemischer Parameter des Schmiermittels beziehen;
eine Erfassungseinheit (9) der Daten, die von der Analyseeinheit (8) kommen;
eine Verarbeitungseinheit (3), die umfasst:
eine Datenspeichereinrichtung (4, 5, 6, 12); und
eine Einrichtung zum Verarbeiten der gespeicherten Daten,
wobei die Datenverarbeitungseinrichtung in der Lage ist, anzeigende Informationen (11) über den Verschleißstatus der mechanischen Elemente der Maschine bereitzustellen, und **dadurch gekennzeichnet, dass** die physikalischen/chemischen Parameter umfassen:
Viskosität;
Fließgrenze;
Flammpunkt;
Flüchtigkeit;
Oxidationsbeständigkeit;
Reinigungs- und Dispergiervermögen;
Korrosionsschutz- und Rostverhinderungsvermögen;
Schaumverhinderungsvermögen;
Sulfataschen; und
metallische Elemente.

7. System (1) nach Anspruch 6, wobei die Datenspeichereinrichtung (4, 5, 6, 12) eine erste Datenbank (4) umfasst, die in der Lage ist, erste Informationen zu enthalten die einen oder mehrere Benutzer (10) des Systems (1) identifizieren.

8. System (1) nach Anspruch 6 oder 7, wobei die Einrichtung zum Speichern von Daten (4, 5, 6, 12) eine zweite Datenbank (5) umfasst, die in der Lage ist, zwerte Informationen zu enthalten, die eine Vielzahl von Maschinen identifizieren, wobei die zweiten Informationen erste Bezugswerte physikallscher/chemischer Parameter für eine Vielzahl von Schmiermitteltypen umfassen.

9. System (1) nach einem der Ansprüche 6 bis 8, wobei die Datenspeichereinrichtung (4, 5, 6, 12) eine dritte Datenbank (6) umfasst, die in der Lage ist, zweite Werte der physikalischen/chemischen Parameter des Schmiermittels zu enthalten, wobei die zweiten Werte mittels der Analyse der einen/mehreren Schmiermittelprobe/n gewonnen werden.

10. System (1) nach den Ansprüchen 8 und 9, wobei die Verarbeitungseinrichtung in der Lage ist, die ersten und zweiten Werte zu vergleichen.

11. System (1) nach einem der Ansprüche 6 bis 10, wobei die Datenspeichereinrichtung (4, 5, 6, 12) eine vierte Datenbank (12) umfasst, die in der Lage ist, Informationen zu enthalten, die sich auf technische Eingriffe beziehen, die an den motorgetriebenen Maschinen ausgeführt werden.

12. System (1) nach einem der Ansprüche 7 bis 11, wobei die Verarbeitungseinrichtung in der Lage ist, ein statistisches Modell auf die in der ersten (4), zweiten (5), dritten Datenbank (6) und vierten Datenbank (12) enthaltenen informationen anzuwenden.

13. System (1) nach einem der Ansprüche 6 bis 12, **dadurch gekennzeichnet, dass** es in der Lage ist, ein Verfahren nach einem der Ansprüche 1 bis 5 auszuführen.

## Revendications

1. Procédé pour surveiller et gérer des données associées à des machines motorisées qui comporte les étapes suivantes consistant à :
- prélever (S3) un ou plusieurs échantillons de lubrifiant d'une machine,
- mémoriser (S1) dans une première base de données (4) des premières informations identifiant un ou plusieurs utilisateurs,
- mémoriser (S2) dans une deuxième base de données (5) des secondes informations identifiant une pluralité de véhicules, lesdites secondes informations comportant des secondes valeurs de référence de paramètres physiques/chimiques pour une pluralité de types de lubrifiant,
- analyser (S4) lesdits un ou plusieurs échantillons de lubrifiant, de manière à mesurer des premières valeurs associées à une pluralité de paramètres physiques/chimiques dudit lubrifiant, et
- traiter (S6) lesdites premières valeurs, en obtenant des informations indicatives (11) concernant l'état d'usure d'éléments mécaniques de ladite machine, **caractérisé en ce que**
lesdits paramètres physiques/chimiques comportent :
- la viscosité,
- la valeur d'allongement,
- le point d'inflammation,
- la volatilité,
- la stabilité à l'oxydation,
- la capacité détergente et de dispersion,
- la capacité anticorrosive et de protection contre la rouille,
- la capacité antiformation de mousse,
- cendres de sulfate, et
- éléments métalliques.

2. Procédé selon la revendication 1, dans lequel ladite étape (S6) de traitement desdites premières valeurs comporte de plus une étape de comparaison desdites premières et secondes valeurs.

3. Procédé selon la revendication 1 ou 2, comportant de plus une troisième étape (S5) consistant à mémoriser dans une troisième base de données (6) lesdites premières valeurs de paramètres physiques/chimiques.

4. Procédé selon l'une quelconque des revendications précédentes, dans lequel ladite étape (S6) de traitement desdites premières valeurs fournit l'application d'un modèle statistique aux informations contenues dans lesdites première (4), deuxième (5) et troisième (6) bases de données.

5. Procédé selon l'une quelconque des revendications précédentes, dans lequel ladite étape (S6) de traitement desdites premières valeurs fournit de plus le traitement d'informations associées à des interventions techniques effectuées sur lesdites machines motorisées, lesdites informations étant contenues dans une quatrième base de données (12).

6. Système (1) pour surveiller et gérer des données associées à des machines motorisées qui comporte :
- une unité de prélèvement (7), capable de prélever un ou plusieurs échantillons de lubrifiant pour des éléments mécaniques d'une machine d'utilisateur (10),
- une unité d'analyse (8) desdits un ou plusieurs échantillons de lubrifiant, capable de mesurer les données associées à une pluralité de paramètres physiques/chimiques dudit lubrifiant,
- une unité de collecte (9) desdites données provenant de ladite unité analyse (8),
- une unité de traitement (3), comportant :
- des moyens de mémorisation de données (4, 5, 6, 12), et
- des moyens pour traiter lesdites données mémorisées,
dans lequel lesdits moyens de traitement de données sont capables de fournir des informations indicatives (11) concernant l'état d'usure desdits éléments mécaniques de ladite machine, et **caractérisé en ce que** lesdits paramètres physiques/chimiques comportent :
- la viscosité,
- la valeur d'allongement,
- le point d'inflammation,
- la volatilité,
- la stabilité à l'oxydation,
- la capacité détergente et de dispersion,
- la capacité anticorrosive et de protection contre la rouille,
- la capacité antiformation de mousse,
- cendres de sulfate, et
- éléments métalliques.

7. Système (1) selon la revendication 6, dans lequel lesdits moyens de mémorisation de données (4, 5, 6, 12) comportent une première base de données (4) capable de contenir des premières informations identifiant un ou plusieurs utilisateurs (10) du système (1).

8. Système (1) selon la revendication 6 ou 7, dans lequel lesdits moyens pour mémoriser des données (4, 5, 6, 12) comportent une deuxième base de données (5) capable de contenir des secondes informations identifiant une pluralité de machines, lesdites secondes informations comportant des premières valeurs de référence de paramètres physiques/chimiques pour une pluralité de types de lubrifiant.

9. Système (1) selon l'une quelconque des revendications 6 à 8,
dans lequel lesdits moyens de mémorisation de données (4, 5, 6, 12) comportent une troisième base de données (6) capable de contenir des secondes valeurs desdits paramètres physiques/chimiques dudit lubrifiant, lesdites secondes valeurs étant obtenues par l'intermédiaire de ladite analyse desdits un ou plusieurs échantillons de lubrifiant.

10. Système (1) selon les revendications 8 et 9, dans lequel lesdits moyens de traitement sont capables de comparer lesdites premières et secondes valeurs.

11. Système (1) selon l'une quelconque des revendications 6 à 10, dans lequel lesdits moyens de mémorisation de données (4, 5, 6, 12) comportent une quatrième base de données (12) capable de contenir des informations associées à des interventions techniques effectuées sur lesdites machines motorisées.

12. Système (1) selon l'une quelconque des revendications 7 à 11, dans lequel lesdits moyens de traitement sont capables d'appliquer un modèle statistique aux informations contenues dans lesdites première (4), deuxième (5), troisième (6) et quatrième (12) bases de données.

13. Système (1) selon l'une quelconque des revendications 6 à 12, **caractérisé en ce qu'**il est capable d'exécuter un procédé selon l'une quelconque des revendications 1 à 5.
